# EUROPEAN PATENT SPECIFICATION

(11) **EP 2 101 473 B1**
(45) Date of publication and mention of the grant of the patent: **17.10.2012**
(21) Application number: 08290232.1
(22) Date of filing: 10.03.2008
(51) Int. Cl.: H04L 29/08, G06F 9/445, G06F 9/46

(54) **Jini front-end component**
JINI-Front-End-Komponente
Composant front-end Jini

(43) Date of publication of application: 16.09.2009
(73) Proprietor: Alcatel Lucent, 75007 Paris (FR)
(72) Inventor: Forlivesi, Claudio, 1040 Brussels (BE); Waegeman, Eric Victor, 9112 Sinaai (BE)
(74) Representative: Wetzel, Emmanuelle

(56) References cited:
- DETER S: "Plug and participate for limited devices in the field of industrial automation" EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, 15 October 2001 (2001-10-15), pages 273-278, XP010588980 ISBN: 978-0-7803-7241-2
- JUNE JANG ET AL: "The design and implementation of the surrogate system for J2ME-devices" TENCON 2004. 2004 IEEE REGION 10 CONFERENCE CHIANG MAI, THAILAND NOV. 21-24, 2004, PISCATAWAY, NJ, USA,IEEE, vol. C, 21 November 2004 (2004-11-21), pages 168-171, XP010797933 ISBN: 978-0-7803-8560-3
- CHOONHWA LEE ET AL: "The GBP iJini Proxy Architecture for Impromptu Mobile Services" APPLICATIONS AND THE INTERNET WORKSHOPS, 2006. SAINT WORKSHOPS 2006. I NTERNATIONAL SYMPOSIUM ON PHOENIX, AZ, USA 23-27 JAN. 2006, PISCATAWAY, NJ, USA,IEEE, 23 January 2006 (2006-01-23), pages 113-117, XP010890188 ISBN: 978-0-7695-2510-5
- YOSHIDA R ET AL: "EXWeb: remotely operating devices in the home network" NETWORKED APPLIANCES, 2002. PROCEEDINGS. 2002 IEEE 4TH INTERNATIONAL W ORKSHOP ON JAN. 15-16, 2001, PISCATAWAY, NJ, USA,IEEE, 15 January 2001 (2001-01-15), pages 267-274, XP010575060 ISBN: 978-0-7803-7259-7

## Description

### Background of the Invention

The invention relates to a Jini front-end component for a connected limited device configuration, CLDC, terminal with an Application Management Software, AMS, the Jini front end component comprising: a Jini proxy code packaging unit for generating a Jini proxy code package from a Jini proxy code of a Jini service. The invention also relates to a computer network comprising at least one Connected Limited Device Configuration, CLDC, terminal with an application management software, AMS, a Jini lookup service serving as a registry for the Jini proxy codes of a plurality of Jini services, and at least one Jini service. The invention further relates to a method for communicating between a Jini client on a Connected Limited Device Configuration, CLDC, terminal with an Application Management Software, AMS, and a Jini service. The invention also relates to a computer program product for implementing the method.

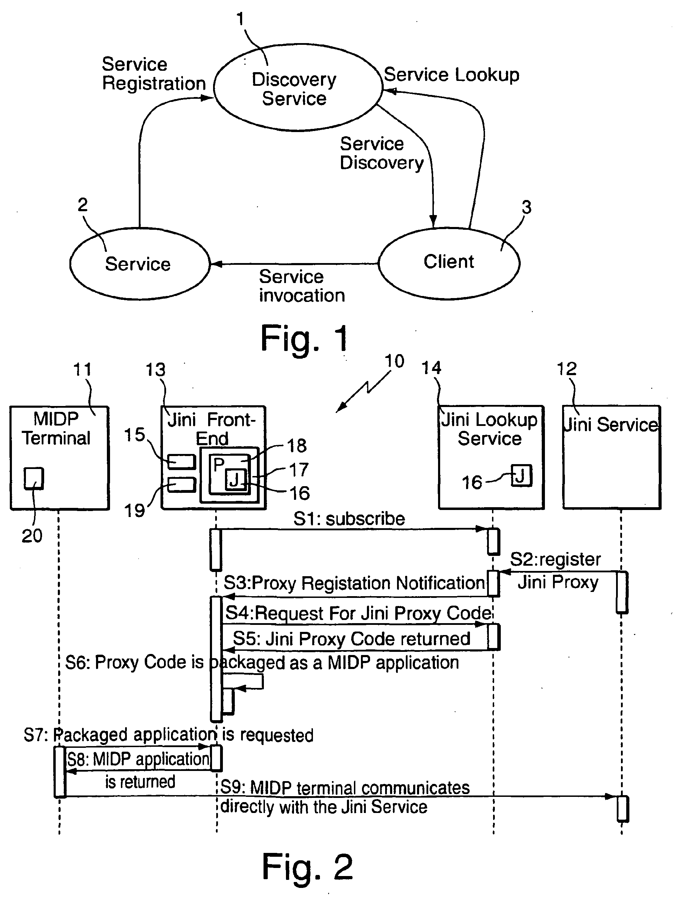

Currently, the Service Oriented Architecture (SOA) paradigm consists of a software framework shown in **Fig. 1**, comprising an entity called Discovery Service **1** or Lookup Service, which is a computer program whose responsibility is to keep a "registry" where services **2** can dynamically register and unregister. The registration of a service 2 involves the provision of some information concerning the service 2 itself to the discovery service 1 (Service Registration). The relevant information that are exchanged usually are: A description of at least one interface that the service 2 exposes, and a description of how the at least one interface can be reached. This information can be searched (Service Lookup) and retrieved (Service Discovery) by clients 3 that want to use the service 2. After having retrieved the relevant information, or the proxy, the client 3 can invoke the service 2 (Service Invocation).

Under the SOA paradigm, applications and services can be dynamically composed together to broaden the offer in terms of new features toward customers, while at the same time reducing the development costs for the integration. In other words, SOA is intended to provide a cheap, easy and yet very powerful and flexible way to merge vertical services together.

There are currently several technologies that try to implement the SOA scheme described with reference to Fig. 1, one of them - a "fast" alternative to Web Services - being called Jini™, which is a Java™ technology that allows distributed services written in the Java™ programming language to advertise themselves and to distribute the code needed for service invocation to their clients, provided that those clients are able to download and execute Java bytecode. The code that a service distributes is called "Jini Proxy", and the distribution process happens through an intermediate entity called "Jini Lookup Service". The latter is used as a discovery service by services to register the code for their clients, and by clients to locate the services and to download the code that they have registered.

At the moment, there is no standard definition of SOA, as many converging technologies are still emerging. Jini is one of them, and it is praised by its performance and scalability. In particular, services exposing a Jini interface suffer from a lower latency in servicing clients' requests as compared to Web Services, because no XML data conversion is required. This is crucial in SOA, since the latency of a chain of services is the sum of the single latencies.

As of today, applying the SOA scheme is not possible if the client is a program running on top of the Java Micro Edition CLDC (Connected Limited Device Configuration), also known as JME™ CLDC. It is a standard platform from Sun Microsystems™, which has been designed to be a special execution environment for Java code, limited in functionality, processing power and hardware requirements, in order to be able to run on small devices, like mobile terminals, ATMs (Automated Teller Machines) and vending machines. For detailed information concerning CLDC, reference is made to JSR 30 and JSR 139. JSR stands for Java Standardization Request and is a document concerning an industry-related standard defined through the Java Community Protocol (JCP), which has been defined and is being maintained by Sun Microsystems™.

In CLDC platforms, the only entity allowed to download Java code is an AMS (Application Management Software) application running on the platform itself, which is by no means accessible to the Java programs and is also not adapted to fetch Java bytecode from random repositories except through the mechanisms allowed by the Mobile Information Device Profile (MIDP) available on top of the CLDC platform, making the direct download and execution of Jini Proxy code impossible, such that the Java bytecode must be fetched in the form of a complete application and installed manually by the user.

To date, the best solution for solving this problem consists in proxying the Jini service using a Java servlet or Web Service, which can be accessed by the CLDC application by using the HTTP (Hyper-Text Transfer Protocol) or SOAP (Simple Object Access Protocol) protocols. The role of this additional entity is to use the Jini Lookup Service, and to download and to execute the Jini proxy on behalf of the application.

However, this solution is not good enough for the following reasons: The new entity that is introduced requires a HTTP/SOAP Server in order to run, and this makes it impossible to run it on top of the same CLDC platform where the client application runs, due to both hardware and software limitations. This requires additional servers to be put in place, hence, additional cost. Moreover, the introduced entity acts like an access point, potentially creating bottlenecks, so it needs to be scaled up to match the intended number of requests per second already supported by the Jini service. In other words, additional cost is introduced just to keep the existing quality of service. Also, benefits from service-dependent networking optimization implemented by the Jini proxy are lost.

When using the Web Service solution, SOAP encoding and decoding increase the latency of the service. In both cases (Servlet and Web Service), additional network traffic is generated, and the latency to serve a request is increased by the tunneling of requests and responses, and, even worse, if the middle tier entity fails, the Jini service becomes unreachable.

The article "Plug and participate for limited devices in the field of industrial automation" by S. Deter, Emerging Technologies and Factory Automation, 2001, Proceedings of the 8th IEEE International Conference, 15 October 2001, pages 273-278, aims to achieving the use of Jini for limited capabilities devices. For this purpose, it is suggested to substitute proxy objects by proxy stubs objects which are generated by a special compiler and which are available locally on the client. The proxy stubs objects on the client side perform a Remote Procedure Call to skeleton objects on the server side which invoke the appropriate methods and return the results to the proxy stub objects.

The article "The design and implementation of the surrogate system for J2ME-devices", by June Jang et al., Tencon 2004, 2004 IEEE vol. C, 21 November 2004, pp. 168-171, proposes a method that allows devices having J2ME CLDC to use the Jini technology, and presents a private protocol and the architecture of surrogate objects for J2ME devices, enabling to use the Jini service through a surrogate host.

The article "The µJini Proxy Architecture for Impromptu Mobile Services" by Choonhwa Lee et al., Applications and the Internet Workshops, 2006, IEEE, 23 January 2006, pages 113-117, describes an architecture that can support context-aware service discovery and delivery for resource-constrained mobile devices. At the heart of the architecture is the µJini proxy which mediates the discovery and delivery processes.

The article "EXWeb: Remotely Operating Devices in the Home Network", by R. Yoshida et al., Networked Appliances, 2002, IEEE, 15 January 2001, pp. 267-274, describes remote device management in home networks by cellular phones, using a web browser installed in a cellular phone. An EXServer which resides on a web server receives an HTTP message from the cellular phone, transforms it into a Jini message, and sends the Jini message to a remote Jini device.

### Object of the Invention

It is the object of the invention to provide: a Jini front-end component, a computer network, a method, and a computer program product of the type described above, all of which allow a CLDC terminal to directly invoke a Jini service.

### Summary of the Invention

This object is achieved by a Jini front-end component of the type described above, comprising: a Jini proxy code packaging unit for generating a Jini proxy code package from a Jini proxy code, the Jini proxy code package being a Mobile Information Device Profile, MIDP, application executable by the AMS of the terminal, the MIDP application implementing a Jini client on the terminal which allows the MIDP application to directly invoke the Jini service.

The basic idea of the invention is to enable a mobile terminal, and more in general, the CLDC platform, to download and execute a particular embodiment of a Jini Proxy code that will be re-packaged so that the AMS could find and install it. This is possible because the AMS must at least contain a facility that downloads and installs software on the terminal. This facility is usually triggered by the web browser embedded within the terminal. Therefore, the idea is to programmatically force the web browser to start the AMS from a requesting application. The new application installed by the AMS may then be used as a Jini client, as it contains the Jini proxy code required for invoking one or more Jini services. For this purpose, the Jini Proxy code (the software client component that the Jini service registers into the Lookup Service) needs to be packaged into an AMS-installable component. This task will be carried out by a separate entity, which is the core of the invention, and which is referred to as a "Jini Front-End Component". As compared to prior art, this entity is not the target of the service requests, and, as a consequence, it scales a lot better. Usually, The Jini Front-End Component is an entity which is remote from the terminal, but it may also be installed on the terminal itself in case the terminal supports code-repackaging and downloading, the latter functionality however requiring a HTTP server to be installed on the terminal. In any case, the Jini Front-End Component is an entity which resides in the network where it can be accessed by the AMS, typically via HTTP.

In a preferred embodiment, the Jini front-end component further comprises a subscription unit for subscribing to a Jini lookup service serving as a registry for the Jini proxy code of a plurality of Jini services. In such a way, the Jini services which have exposed their Jini proxy code to the Jini lookup service are made available to the Jini front-end component, and thus also to the terminal.

In another preferred embodiment, the Jini front-end component further comprises a package locating unit for providing a pointer to a location of the Jini proxy code package, in particular a HTTP (Hypertext Transfer Protocol) URI (Uniform Resource Identifier), to the terminal. Thus, an application run on top of the CLDC may programmatically instruct a web browser of the terminal to open the HTTP URI. When the MIDP profile is used on the terminal, the web browser is required to activate the AMS whenever the URI points to content marked as "text/Vnd.sun.j2me.app-descriptor" in its MIME (Multipurpose Internet Mail Extension) type. The AMS then downloads and installs locally the installable Jini proxy code package in the form of an application or library. After the new application which implements the Jini client for the Jini service has been started, it is possible to send requests directly to the Jini service, as the Jini proxy code is part of the new application. When the web browser is used for downloading the Jini proxy code package, the Jini front-end component may be considered as a HTTP front-end for the Jini lookup service.

A further aspect of the invention is implemented in a computer network of the type described above, further comprising: a Jini front-end component as described above, wherein the AMS of the CLDC terminal is adapted to execute a Jini proxy code package in the form of a Mobile information Device Profile, MIDP, application generated by the Jini front-end component, allowing the MIDP application to directly invoke the Jini service. In the computer network described above, no middle tier such as a Web Server is required, as the Jini proxy code is part of the application which is executed by the AMS, such that a Jini client can be implemented which is able to communicate directly with the Jini service.

In a preferred embodiment, a Mobile Information Device Profile, MIDP, is installed on the CLDC terminal. The MIDP profile is one of the profiles which runs on top of CLDC, which is capable to instruct the terminal to open up a HTTP URI with a web browser. It is understood that other profiles which run on top of the CLDC may be used as well for this purpose.

In a further preferred embodiment, a browser is installed on the terminal for downloading the Jini proxy code package from a location indicated by the package locating unit of the Jini front-end component. The Jini front-end component may comprise a memory for storing Jini proxy code packages, the memory being accessible by a web browser. Alternatively, the Jini proxy code packages generated by the Jini proxy code packaging unit may be transmitted to and stored in any suitable location in the network, the Jini front-end component only storing the pointers, e.g. HTTP URLs, to the Jini proxy code packages.

A further aspect of the invention is implemented in a method for invoking a Jini Service by a Jini client on a Connected Limited Device Configuration, CLDC, terminal with an Application Management Software, AMS, the method comprising: in a Jini front-end component, generating a Jini proxy code package from a Jini proxy code of the Jini service, the Jini proxy code package being a Mobile Information Device Profile, MIDP, application; executing the MIDP application by the AMS of the terminal for implementing the Jini client on the terminal, and directly invoking the Jini service by the MIDP application. In such a way, the application which is generated by the execution of the Jini proxy code may directly communicate with the Jini services which have their Jini proxy code contained in the Jini proxy code package.

In a preferred variant, the method further comprises: subscribing the Jini front-end component to a Jini lookup service which serves as a registry for the Jini proxy codes of a plurality of Jini services. In this way, whenever a new Jini service is advertised, the Jini front-end component will be notified and may download the Jini proxy code for packaging it into an application or library which can be installed by the AMS.

Preferably, the method further comprises: using a browser of the terminal for downloading the Jini proxy code package from a location indicated by a pointer provided by the Jini front-end component. The browser may be opened up by an application which first checks the Jini front-end component about the Jini services it needs to use and then uses the browser to download the corresponding Jini proxy code package containing the required Jini proxy codes, the latter being provided as an aggregate installable component or application to the AMS.

A final aspect of the invention is implemented in a computer software product comprising code for implementing all the steps of the method described above when the program is run on a data-processing system. The person skilled in the art will appreciate that the "units" which are described above may be implemented as functions of a program code which is processed on the data-processing systems of the Jini Front-end component and the terminal, respectively.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: shows a schematic diagram representing a service oriented architecture, and
- **Fig. 2**: shows a computer network with the steps required for invoking a Jini service from a MIDP terminal.

### Detailed Description of Preferred Embodiments

**Fig. 2** shows a computer network **10** which implements the service-oriented architecture of Fig. **1** between a Jini service **12** and a terminal **11** with a CLDC platform on top of which a MIDP profile is used. The computer network 10 further comprises a Jini lookup service **14** serving as a registry for Jini proxy codes and a Jini front-end component **13**, allowing an Application Management Software, AMS, of the terminal 11 to invoke the Jini service 12 in a way described below:

In a first step **S1**, a subscription unit **15** of the Jini front-end component 13 subscribes to the Jini lookup service 14 such that the latter will notify the Jini front-end component 13 whenever a new Jini service is advertised. In a second step **S2**, the Jini service 12 registers its Jini proxy code **16** in the Jini lookup service 14, and in a subsequent step **S3**, the Jini front-end component 13 is informed about the registration of the new Jini proxy code 16. In two further steps **S4**, **S5** the Jini front-end component 13 requests and downloads the Jini proxy code 16. A Jini proxy code packaging unit **17** of the Jini front-end component 13 then generates a Jini proxy code package **18** from the Jini proxy code 16 in a subsequent step **S6,** i.e. the Jini proxy code packaging unit 17 packages the Jini proxy code 16 into an application or library which can be managed and installed by the AMS of the terminal 11.

When a MIDP application on the terminal 11 starts, in a further step **S7**, the application checks the Jini front-end component 13 about the Jini services it needs to use. A package locating unit **19** of the Jini front-end component 13 then returns a HTTP URI as a pointer to an aggregate installable component or application that has been created when the Jini service 12 advertised itself in the previous step S2.

In a further step **S8,** the application programmatically instructs the terminal 11 to open an HTTP URI by using a web browser **20** installed on the terminal 11. The browser 20 is required to activate the AMS whenever the URI points to content marked as 'text/vnd.sun.j2me.app-descriptor' in its MIME type. The AMS then downloads and locally installs the Jini proxy code package 18 in the form of a MIDP application or library (and, starting from MIDP 3.0, also single components) as addressed by the downloaded content. In a final step **S9,** the new application which implements the client for the Jini service 12 is started, it now being possible to send requests from the terminal 11 directly to the Jini service 12. The person skilled in the art will appreciate that although the Jini proxy code package 18 may be stored in the Jini front-end component 13, it is also possible to store the Jini proxy code package 18 at a different location within the computer network 10.

The front-end component 13 offers several advantages in terms of functionalities and resource optimization, namely: The Jini proxy code 13 is now part of the application run on the terminal 11, which means that the Jini service can 12 be invoked directly, i.e. without a middle tier (like a Web Server). This has several implications: There is no additional system in-between the terminal 11 and the Jini service 12 which has to be managed. Moreover, the availability of the Jini service 12 now depends solely on the Jini service 12 itself and it is not influenced by the failures of the additional middle tier any more, rendering the system more robust, secure, and scalable, such that no bottlenecks are introduced and latency is reduced. Moreover, the application on the terminal 11 may update automatically if required to do so by newer versions of the Jini service 12. Also, the Jini proxy code 16 of a Jini service 12 can be recompiled and packaged to be compatible towards a wide range of CLDC and MIDP terminals 11, thus also allowing device-specific optimizations.

A possible drawback of this solution could result from the lack of flexibility that characterizes the AMS security profile. Since the solution described above involves the downloading of code on the local terminal 11, special care must be paid when securing network traffic and when signing the Jini proxy code package. Ideally, all the packaged code should be signed by the Jini front-end entity 13, and, in respect to that, the terminal 11 should be properly configured not to accept unsigned code (or at least to provide a sandbox environment for those code modules which are not signed) in order to guarantee that malicious code will not be installed by mistake. However, this possible drawback can be mitigated by MIDP itself, which requires the devices to ask the user's permission whenever an unsigned program tries to execute a 'sensible' operation, like opening a network connection or accessing the user data in the local storage (e.g. address book, file system, multimedia content and so on).

In summary, the above solution exploits hitherto unused potential with respect to the use and deployment of Jini services in mobile terminals implementing the CLDC (Connected Limited Device Configuration) and MIDP (Mobile Information Device Profile) platforms by making Jini proxy code part of applications executed on these terminals, thus allowing these applications to directly communicate with the invoked Jini service(s). The person skilled in the art will appreciate that the solution described above is not limited to the MIDP profile and that other profiles which allow to programmatically force a browser or another suitable entity installed on the terminal to start the AMS from a requesting application may be used as well.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

## Claims

1. Jini front-end component (13) for a Connected Limited Device Configuration, CLDC, terminal (11) with an Application Management Software, AMS, the Jini front-end component (13) comprising:
a Jini proxy code packaging unit (15) for generating a Jini proxy code package (18) from a Jini proxy code (16) of a Jini service (12),
**characterized in that**
the Jini proxy code package (18) is a Mobile Information Device Profile, MIDP, application executable by the AMS of the terminal (11), the MIDP application implementing a Jini client on the terminal (11) which allows the MIDP application to directly invoke the Jini service (12).

2. Jini front-end component according to claim 1, further comprising a subscription unit (19) for subscribing to a Jini lookup service (14) serving as a registry for the Jini proxy code (16) of a plurality of Jini services (12).

3. Jini front-end component according to claim 1, further comprising a package locating unit (19) for providing a pointer to a location of the Jini proxy code package (18), in particular a HTTP URI, to the terminal (11).

4. Computer network (10), comprising:
at least one Connected Limited Device Configuration, CLDC, terminal (11) with an application management software, AMS,
a Jini lookup service (14) serving as a registry for the Jini proxy codes (16) of a plurality of Jini services (12),
at least one Jini service (12),
**characterized in that**
the computer network (10) further comprises a Jini front-end component (13) according to claim 1, and **in that** the AMS of the CLDC terminal (11) is adapted to execute a Jini proxy code package (18) in the form a Mobile Information Device Profile, MIDP, application generated by the Jini front-end component (13), allowing the MIDP application to directly invoke the Jini service (12).

5. Computer network according to claim 4, wherein a Mobile Information Device Profile, MIDP, is installed on the CLDC terminal (11).

6. Computer network according to claim 4, wherein a browser (20) is installed on the terminal (11) for downloading the Jini proxy code package (18) from a location indicated by the package locating unit (19) of the Jini front-end component (13).

7. A method for invoking a Jini service (12) by a Jini client on a Connected Limited Device Configuration, CLDC, terminal (11) with an Application Management Software, AMS, the method **characterized by**:
in a Jini front-end component (13), generating a Jini proxy code package (18) from a Jini proxy code (16) of the Jini service (12), the Jini proxy code package (18) being a Mobile Information Device Profile, MIDP, application,
executing the MIDP application by the AMS of the terminal (11) for implementing the Jini client on the terminal (11), and
directly invoking the Jini service (12) by the MIDP application.

8. Method according to claim 7, further comprising:
subscribing the Jini front-end component (13) to a Jini lookup service (14) which serves as a registry for the Jini proxy codes (16) of a plurality of Jini services (12).

9. Method according to claim 7, further comprising:
using a browser (20) of the terminal (11) for downloading the Jini proxy code package (18) from a location indicated by a pointer provided by the Jini front-end component (13).

10. Computer software product comprising code for implementing all the steps of the method according to claim 7 when the code is run on a data-processing system.

## Patentansprüche

1. Jini-Front-End-Komponente (13) für ein Connected Limited Device Configuration; CLDC, Endgerät (11) mit einer Anwendungsverwaltungs-Software, AMS, wobei die Jini-Front-End-Komponente (13) umfasst: Eine Jini-Proxy-Codepaketierungseinheit (15) zum Erzeugen eines Jini-Proxy-Codepakets (18) aus einem Jini-Proxy-Code (16) eines Jini-Dienstes (12),
**dadurch gekennzeichnet, dass**
das Jini-Proxy-Codepaket (18) eine von der AMS des Endgeräts (11) ausführbare Mobile Information Device Profile, MIDP, Anwendung ist, wobei die MIDP-Anwendung einen Jini-Client auf dem Endgerät (11) implementiert, welcher es der MIDP-Anwendung ermöglicht, den Jini-Dienst (12) direkt aufzurufen.

2. Jini-Front-End-Komponente nach Anspruch 1, weiterhin umfassend eine Abonniereinheit (19) zum Abonnieren eines Jini-Lookup-Dienstes (14), welcher als Register für den Jini-Prox-Code (16) einer Vielzahl von Jini-Diensten (12) dient.

3. Jini-Front-End-Komponente nach Anspruch 1, weiterhin umfassend eine Paketlokalisierungseinheit (19) zum Bereitstellen eines Zeigers auf eine Stelle, an der sich das Jini-Proxy-Codepaket (18) befindet, insbesondere eine HTTP-URI, an das Endgerät (11).

4. Computernetzwerk (10), umfassend:
Mindestens ein Connected Limited Device Configuration, CLDC, Endgerät (11) mit einer Anwendungsverwaltungs-Software, AMS,
einen Jini-Lookup-Dienst (14), welcher als Register für die Jini-Proxy-Codes (16) einer Vielzahl von Jini-Diensten (12) dient,
mindestens einen Jini-Dienst (12),
**dadurch gekennzeichnet, dass**
das Computernetzwerk (10) weiterhin eine Jini-Front-End-Komponente (13) gemäß Anspruch 1 umfasst, und dass die AMS des CLDC, Endgeräts (11) dazu ausgelegt ist, ein Jini-Proxy-Codepaket (18) in der Form einer von der Jini-Front-End-Komponente (13) erzeugten Mobile Information Device Profile bzw. MIDP-Anwendung auszuführen, wodurch es der MIDP, Anwendung ermöglicht wird, den Jini-Dienst (12) direkt aufzurufen.

5. Computernetzwerk nach Anspruch 4, wobei ein Mobile Information Device Profile, MIDP, auf dem CLDC, Endgerät (11) installiert ist.

6. Computernetzwerk nach Anspruch 4, wobei ein Browser (20) zum Herunterladen des Jini-Proxy-Codepakets (18) von einer von der Paketlokalisierungseinheit (19) der Jini-Front-End-Komponente (13) angegebenen Stelle auf dem Endgerät (11) installiert ist.

7. Verfahren zum Aufrufen eines Jini-Dienstes (12) durch einen Jini-Client auf einem Connected Limited Device Configuration, CLDC, Endgerät (11) mit einer Anwendungsverwaltungs-Software, AMS, wobei das Verfahren **gekennzeichnet ist durch**:
In einer Jini-Front-End-Komponente (13), Erzeugen eines Jini-Proxy-Codepakets (18) aus einem Jini-Proxy-Code (16) des Jini-Dienstes (12), wobei das Jini-Proxy-Codepaket (18) eine Mobile Information Device Profile bzw. MIDP, Anwendung ist, Ausführen der MIDP, Anwendung **durch** die AMS des Endgeräts (11) zum Implementieren des Jini-Clients auf dem Endgerät (11), und direktes Aufrufen des Jini-Dienstes (12) **durch** die MIDP-Anwendung.

8. Verfahren nach Anspruch 7, weiterhin umfassend:
Abonnieren, durch die Jini-Front-End-Komponente (13), eines Jini-Lookup-Dienstes (14), welcher als Register für die Jini-Proxy-Codes (16) einer Vielzahl von Jini-Diensten (12) dient.

9. Verfahren nach Anspruch 7, weiterhin umfassend:
Verwenden eines Browsers (20) des Endgeräts (11) zum Herunterladen des Jini-Proxy-Codepakets (18) von einer von einem von der Jini-Front-End-Komponente (13) bereitgestellten Zeiger angegebenen Stelle.

10. Computersoftware-Produkt mit einem Code zum Durchführen aller Schritte des Verfahrens gemäß Anspruch 7, wenn der Code auf einem Datenverarbeitungssystem ausgeführt wird.

## Revendications

1. Composant frontal Jini (13) pour un terminal (11) de configuration pour dispositifs connectés limités, CLDC, avec un logiciel de gestion d'applications, AMS, le composant frontal Jini (13) comprenant : une unité d'encapsulation de code de proxy Jini (15) pour générer un paquet de code de proxy Jini (18) à partir d'un code de proxy Jini (16) d'un service Jini (12),
**caractérisé en ce que**
le paquet de code de proxy Jini (18) est une application de profil pour dispositifs informatiques mobiles, MIDP, exécutable par l'AMS du terminal (11), l'application MIDP mettant en oeuvre un client Jini sur le terminal (11) qui permet à l'application MIDP d'appeler directement le service Jini (12).

2. Composant frontal Jini selon la revendication 1, comprenant en outre une unité d'abonnement (19) pour souscrire un abonnement à un service de recherche Jini (14) servant de registre pour le code de proxy Jini (16) d'une pluralité de services Jini (12).

3. Composant frontal Jini selon la revendication 1, comprenant en outre une unité de localisation de paquets (19) pour fournir un pointeur à un emplacement du paquet de code de proxy Jini (18), en particulier un URI HTTP, au terminal (11).

4. Réseau informatique (10), comprenant :
au moins un terminal (11) de configuration pour dispositifs connectés limités, CLDC, avec un logiciel de gestion d'applications, AMS, un service de recherche Jini (14) servant de registre pour les codes de proxy Jini (16) d'une pluralité de services Jini (12),
au moins un service Jini (12),
**caractérisé en ce que**
le réseau informatique (10) comprend en outre un composant frontal Jini (13) selon la revendication 1, et **en ce que** l'AMS du terminal CLDC (11) est adapté pour exécuter un paquet de code de proxy Jini (18) sous la forme d'une application de profil pour dispositifs informatiques mobiles, MIDP, générée par le composant frontal Jini (13), permettant à l'application MIDP d'appeler directement le service Jini (12).

5. Réseau informatique selon la revendication 4, dans lequel un profil pour dispositifs informatiques mobiles, MIDP, est installé sur le terminal CLDC (11).

6. Réseau informatique selon la revendication 4, dans lequel un navigateur (20) est installé sur le terminal (11) pour télécharger le paquet de code de proxy Jini (18) depuis un emplacement indiqué par l'unité de localisation de paquets (19) du composant frontal Jini (13).

7. Procédé pour appeler un service Jini (12) par un client Jini sur un terminal (11) de configuration pour dispositifs connectés limités, CLDC, avec un logiciel de gestion d'applications, AMS, **caractérisé par** : la génération d'un paquet de code de proxy Jini (18), dans un composant frontal Jini (13),
à partir d'un code de proxy Jini (16) du service Jini (12), le paquet de code de proxy Jini (18) étant une application de profil pour dispositifs informatiques mobiles, MIDP, l'exécution de l'application MIDP par l'AMS du terminal (11) pour mettre en oeuvre le client Jini sur le terminal (11), et l'appel direct du service Jini (12) par l'application MIDP.

8. Procédé selon la revendication 7, comprenant en outre :
la souscription de l'abonnement du composant frontal Jini (13) à un service de recherche Jini (14) qui sert de registre pour les codes de proxy Jini (16) d'une pluralité de services Jini (12).

9. Procédé selon la revendication 7, comprenant en outre :
l'utilisation d'un navigateur (20) du terminal (11) pour télécharger le paquet de code de proxy Jini (18) depuis un emplacement indiqué par un pointeur fourni par le

10. composant frontal Jini (13).
Produit logiciel informatique comprenant un code pour mettre en oeuvre toutes les étapes du procédé selon la revendication 7 quand le code est exécuté sur un système de traitement de données.
